# EUROPÄISCHE PATENTSCHRIFT

(11) **EP 3 907 126 B1**
(45) Veröffentlichungstag und Bekanntmachung des Hinweises auf die Patenterteilung: **29.11.2023**
(21) Anmeldenummer: 21171591.7
(22) Anmeldetag: 30.04.2021
(51) Int. Cl.: B62K 7/04, B62K 5/02, B62K 5/10, B62M 6/60

(54) **LASTEN-FAHRRAD MIT BREITEN-ÄNDERUNG**
CARGO BICYCLE WITH WIDTH ALTERATION
VÉLO CARGO AVEC CHANGEMENT DE LA LARGEUR

(30) Priorität: 06.05.2020 DE 102020112259
(43) Veröffentlichungstag der Anmeldung: 10.11.2021
(73) Patentinhaber: Völkl Patente GmbH & Co. KG, 83052 Bruckmühl (DE)
(72) Erfinder: Völkl, Thomas, 83052 Bruckmühl (DE)
(74) Vertreter: Weickmann & Weickmann PartmbB

(56) Entgegenhaltungen:
- WO-A1-2020/053424
- DE-B3-102017 005 699
- GB-A- 2 518 820

## Beschreibung

### I. Anwendungsgebiet

Die Erfindung betrifft Lasten-Fahrräder, um Lasten zu transportieren und damit auch entlang von Radwegen oder Fußwegen fahren so können.

### II. Technischer Hintergrund

Lasten-Fahrräder sind in unterschiedlichen Ausführungsformen bekannt:
Es sind einerseits einspurige Lasten-Fahrräder bekannt, bei denen jedoch die Tragfähigkeit sehr begrenzt ist.

Es sind andererseits Lastenfahrräder bekannt, bei denen das Chassis, also der Rahmen, so gestaltet ist, dass der vordere Teil von der Sattelstrebe aus nach vorne, der Fahrerteil, konventionell gestaltet ist, also mit einem einzigen, lenkbaren Vorderrad, während der hintere Teil des Chassis, das Lasten-Teil, eine Ladeplattform trägt.

Die Ladeplattform wird in der Regel von zwei nebeneinanderliegenden, meist neben der Ladeplattform nach oben aufragenden, Rädern abgestützt, was bewirkt, dass die Ladefläche nicht von allen Seiten frei zugänglich ist, und darüber hinaus, dass die Breite des Fahrzeuges deutlich breiter ist als die Breite der Ladefläche und der Last.

Dies wirkt sich sehr negativ aus, wenn die Last selbst bereits relativ breit ist, beispielsweise eine 80 cm breite Europalette ist, und das Lastenfahrrad dennoch auf Radwegen benutzt werden soll.

Die Ladefläche kann sich alternativ auch vor dem Fahrer befinden, welcher entweder das dritte Rad lenkt oder bei einer vorne liegenden Ladeplattform auch die beiden Räder an der Ladeplattform.

Da der Trend bei Lasten-Fahrrädern zu immer größeren Nutzlasten geht und insbesondere beispielsweise eine Euro-Palette auf der Ladeplattform Platz finden soll, sind die bisher angewandten Bauformen hinsichtlich Stabilität, Lenkbarkeit und auch Komfort nicht mehr ausreichend, obwohl es bereits bekannt ist, den Antrieb unterstützt oder ausschließlich durch Elektro-Motoren zu realisieren.

Ein weiteres Problem besteht deshalb darin, wie eine so große Last wie etwa eine beladene Euro-Palette - sofern kein Gabelstapler vorhanden ist - auf die Ladefläche des Lasten-Fahrrades gebracht werden kann und auch wieder abgeladen werden kann.

In diesem Zusammenhang sind als technologischer Hintergrund die DE 10 2017 005 699 B3, WO 2020 / 053 424 A1 sowie die GB 2 518 820 A bekannt. Dokument DE102017005699B3 zeigt die Präambel des Anspruchs 1.

### III. Darstellung der Erfindung

### a) Technische Aufgabe

Es ist daher die Aufgabe gemäß der Erfindung, ein einfach herzustellendes, auch unter hoher Beladung sicher fahrbares und entsprechend stabiles Lasten-Fahrrad mit einem Elektro-Antrieb zur Verfügung zu stellen, welches nicht breiter ist als die Breite der zu transportierenden Last und bei dem das Aufnehmen der Last nicht manuell erfolgen muss.

### b) Lösung der Aufgabe

Diese Aufgabe wird durch die Merkmale des Anspruchs **1** gelöst. Vorteilhafte Ausführungsformen ergeben sich aus den Unteransprüchen.

Ein Lastenrad besteht üblicherweise aus einem Fahrerteil, welches den Sattel für den Fahrer und zumindest den schwenkbaren Lenker umfass, mit dem er das Lastenrad lenkt, sowie ein Lastenteil, welches einen Ladungsträger und zwei in Querrichtung zur Fahrtrichtung beabstandete Radeinheiten mit je einem Rad aufweist. Für die elektrische Unterstützung ist wenigstens eines der Räder mit einem Fahr-Motor wirkverbunden.

Dabei kann sich der Lastenteil vorne oder hinten befinden, bei einem vorne angeordneten Lastenteil kann das einzelne Rad des Fahrradteiles lenkbar sein oder auch die beiden Räder am Lastenteil.

Erfindungsgemäß besitzt das Lastenrad einerseits eine Verstell-Vorrichtung, um die beiden in Querrichtung beabstandeten Räder des Lastenteiles zwischen einer Lade-Stellung mit geringem Abstand und einer Fahr-Stellung mit größerem Abstand zu verstellen, sowie eine Hubvorrichtung mit einem anhebbaren Ladungsträger, der unter die Last eingefahren werden kann und diese anheben kann.

Dadurch können zwei Probleme gleichzeitig gelöst werden:
Zum einen kann das Aufladen der Last mittels der Hubvorrichtung auf einfache Art und Weise durchgeführt werden, auch wenn es sich um eine große und schwere, einstückige Last wie etwa eine beladene Euro-Palette handelt.

Zum anderen können die beiden Räder des Lastenteiles nach entsprechendem Anheben der Last soweit gegeneinander zur Mitte verlagert werden, dass sie sich unter der Last befinden und vorzugsweise seitlich auch nicht über die Last vorstehen, sodass die maximale Breite des Lastenrades in der Fahr-Stellung durch die vorgegebene maximale Breite der Last, meist eine Euro-Palette, nicht hinausgeht.

Zum Laden werden dagegen die beiden Räder so weit auseinandergefahren, dass die Last dazwischen eingefahren werden kann und von der Hubvorrichtung ergriffen werden kann.

Vorzugsweise besteht der anhebbare Ladungsträger der Hubvorrichtung deshalb aus zwei - in ihrem Querabstand meist zueinander einstellbaren - Hubzinken, die durch entsprechendes Verfahren des gesamten Lastenrades in die Freiräume unter der Palette eingefahren werden können.

Anschließend werden die Hubzinken von der Hubvorrichtung hochgefahren bis über die Höhe der Radeinheiten des Lastenteiles und die Radeinheiten zur Mitte hin unter den angehobenen Ladungsträger in Form der Hubzinken und die Last eingefahren. Als Fahr-Stellung kann die Last seitlich auf den beiden darunter befindlichen Radeinheiten, insbesondere den über jedem der Räder vorhandenen Rad-Abdeckungen, abgelegt werden, sodass das Gewicht der Last nicht mehr vollständig auf den Hubzinken lastet.

Alternativ kann auch während der Fahrt die Last nur auf den Hubzinken ruhen und mit Abstand über den beiden Rädern des Lastenteiles schweben, wodurch der Schwerpunkt etwas höher wird. Dann ist der Ladungsträger wie etwa die Hubzinken in der Höhenlage über den Radeinheiten fixierbar, vorzugsweise formschlüssig verriegelbar, um ein unerwünschtes Absinken auf die Radeinheiten - die dann nicht unbedingt eine Radabdeckung besitzen müssen - während des Fahrens zu vermeiden.

Vorzugsweise sind die beiden quer beabstandeten Radeinheiten am Chassis des Lastenteiles in Querrichtung verlagerbar, und ebenso ist der in der Höhe anhebbare Ladungsträger am Chassis des Lastenteiles in der Höhe geführt. Das Chassis des Lastenteiles nimmt meist auch die Batterien für den elektrisch angetriebenen Fahr-Motor auf.

Die Radeinheiten können entweder linear in Querrichtung verlagerbar sein oder um eine in Fahrtrichtung verlaufende Schwenkachse verschwenkbar sein von einer Stellung unter der Last in eine Stellung außerhalb und neben der Last.

Die Radeinheiten können entweder am Chassis des Lastenteiles oder auch an dem anhebbaren Ladungsträger befestigt sein. Das Befestigen am Ladungsträger hat den Vorteil, dass das nach innen Schwenken bei so hoch angehobenem Ladungsträger erfolgen kann, dass die Räder beim nach innen Schwenken noch keinen Kontakt zum Untergrund haben, und danach erst der Ladungsträger abgesenkt wird.

Bei einer Befestigung am Chassis des Lastenteiles haben die Räder immer Kontakt zum Untergrund oder zumindest vor dem Erreichen ihrer Fahrstellung, sodass das Verstellen in die Fahr-Stellung nur bei fahrendem Lastenrad erfolgen kann, zumindest gegen Ende der Verstell-Bewegung.

In der Regel, vor allem wenn das Lastenrad ausschließlich elektrisch angetrieben wird, befindet sich am Fahrerteil ein Geschwindigkeitsgeber, den der Fahrer zum Einstellen der Fahrgeschwindigkeit betätigen kann.

Das Lastenrad kann auch über einen zusätzlichen Tretantrieb verfügen, der bewirkt, dass eine elektrische Antriebsunterstützung in einem vorgegebenen Verhältnis zu der über den Pedalantrieb eingebrachten Antriebskraft zugesteuert wird, sodass kein Geschwindigkeits-Geber am Fahrradteil vorhanden ist, sondern höchstens ein Wählschalter für das Maß der elektrischen Unterstützung.

Aus Traktionsgründen sind vorzugsweise die beiden Räder des Lastenteiles elektrisch angetrieben, und vorzugsweise über zwei unabhängig voneinander ansteuerbare Elektromotoren, sodass deren Drehzahl bei Kurvenfahrt so angepasst werden kann, dass das kurvenäußere Rad schneller dreht.

Zu diesem Zweck kann an der Gabel des Lastenrades ein erster Sensor vorhanden sein, der deren Lenker-Einschlagwinkel detektiert und dies signaltechnisch an die Steuerung meldet.

Zusätzlich kann das Lastenrad so gestaltet sein, dass der Fahrerteil um eine in Fahrtrichtung verlaufende, etwa horizontal liegende Achse gegenüber dem Lastenteil kippbar ist für Kurvenfahrt.

Vorzugsweise ist dann ein Unterzug des Fahrerteiles kippbar um diese Kippachse am Lastenteil befestigt und ein dortiger zweiter Sensor detektiert den Kippwinkel, der - zusätzlich oder statt - des Lenker-Einschlagwinkels ebenfalls der Steuerung zur Verfügung gestellt wird zur Steuerung der Drehzahlen der beiden Motore bei Kurvenfahrt.

Vorzugsweise ist das Fahrerteil vor dem Lastenteil angeordnet, und die Hubzinken stehen vom Chassis des Lastenteiles nach hinten ab, sodass zum Einfahren unter die Last das Lastenfahrrad rückwärts bewegt werden muss.

Die Räder des Lastenteiles sind vorzugsweise gegenüber dem Chassis des Lastenteils gefedert, beispielsweise indem sie jeweils an einer Schwinge befestigt sind, die beabstandet zur Radachse um eine Schwingen-Achse am Lastenteil verschwenkbar ist.

Dabei kann die Federung durch einen Torsionskörper erfolgen, der insbesondere um die Schwingen-Achse herum angeordnet sein kann, um die Schwinge in die Normallage zurück zu schwenken.

Die Fahrbremse kann zumindest teilweise dadurch zur Verfügung gestellt werden, dass der elektrische Fahr-Motor ohne Stromzufuhr als Generator wirkt und dadurch eine Verzögerungs-Wirkung entfaltet, die insbesondere einstellbar ist in ihrer Rekuperationswirkung.

Die Feststellbremse ist vorzugsweise eine mechanische, kraftschlüssige Bremse oder auch formschlüssige Bremse, beispielsweise indem wie bekannt Bremsbacken gegen die beiden Seiten einer mit dem entsprechenden Rad mitdrehenden Bremsscheibe anpressbar sind.

Die Bremselemente sind dann in die bremsende Stellung vorgespannt und nur elektrisch mittels Strom aus der Batterie oder dem als Generator wirkenden Elektromotor in die nicht bremsende Stellung bewegt und gehalten, sodass im stromlosen Zustand die Feststellbremse aktiv ist.

Sofern ein zusätzlicher Tretantrieb vorhanden ist, ist dieser vorzugsweise mit einem der Räder nicht mechanisch verbunden, sondern über eine sogenannte elektrische Kette, indem mittels des Tretantriebes und eines damit wirkverbundenen Generators Strom erzeugt wird, der an die Fahr-Motoren oder die Batterie weitergeleitet wird.

Vorzugsweise treibt der Fahr-Motor sowohl die Hubvorrichtung an und/oder die VerstellEinrichtung zum Verstellen der Räder des Lastenteiles.

Dann ist ein Umschalter vorhanden, mit dem man einstellt, was davon der Fahr-Motor momentan antreiben soll.

Hinsichtlich der Vorgehensweise zum Betrieb eines solchen Lastenrades wird zum Aufnehmen einer Last vom Untergrund mittels Bewegen des Lastenrades die höhenbewegliche Lastaufnahme unter die Last eingefahren, wofür vorher die Radeinheiten in ihre weit zueinander beabstandete Lade-Stellung verbracht werden, damit die Last dazwischen Platz findet.

Anschließend wird die Last mittels des Ladungsträgers so hoch gehoben, dass die Radeinheiten unter die Last und ggfs. auch den Ladungsträger in die Fahr-Stellung eingefahren werden können, sodass insbesondere das Lastenrad nicht mehr breiter ist als die Breite der von ihm getragenen Last.

Das Absetzen der Last erfolgt analog umgekehrt.

### c) Ausführungsbeispiele

Ausführungsformen gemäß der Erfindung sind im Folgenden anhand der Figuren beispielhaft näher beschrieben. Es zeigen:
- **Figur 1a, b:**: eine perspektivische Ansicht und eine Seitenansicht des Lasten-Fahrrades ohne Last,
- **Figur 1c:**: eine perspektivische Ansicht fast von hinten auf das Lasten-Fahrrad gemäß Figur 1a, b, mit Sattel, Lenker und einer leeren Europalette als Last,
- **Figur 1d:**: eine Detailvergrößerung zu Figur 1c,
- **Figuren 2a** - **d:**: in einer Heckansicht das Lasten-Fahrrad gemäß Figur 1a mit Last auf der Ladeplattform, in unterschiedlichen Funktionszuständen.

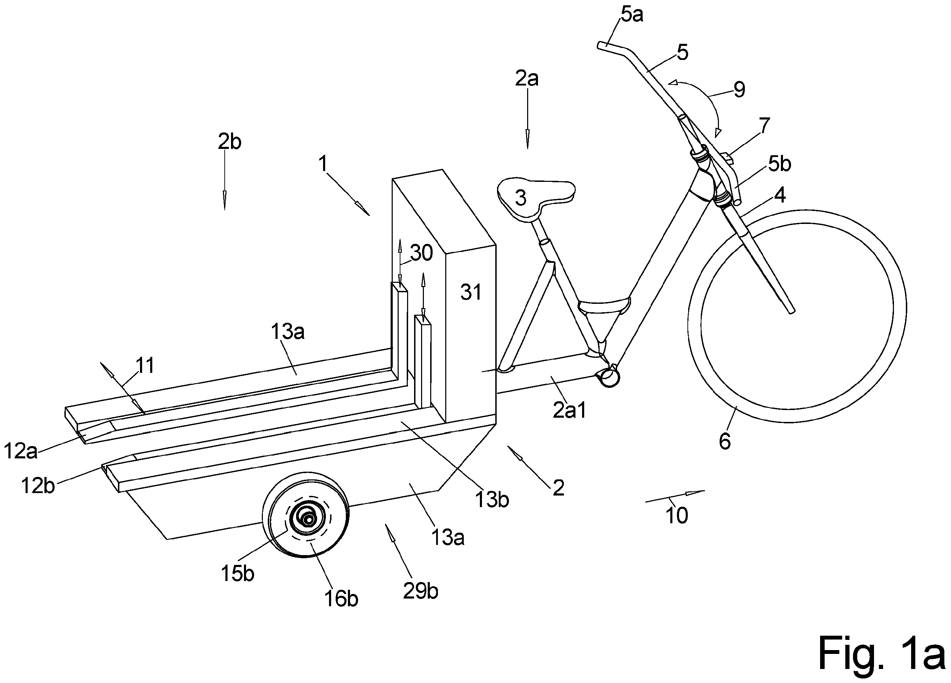

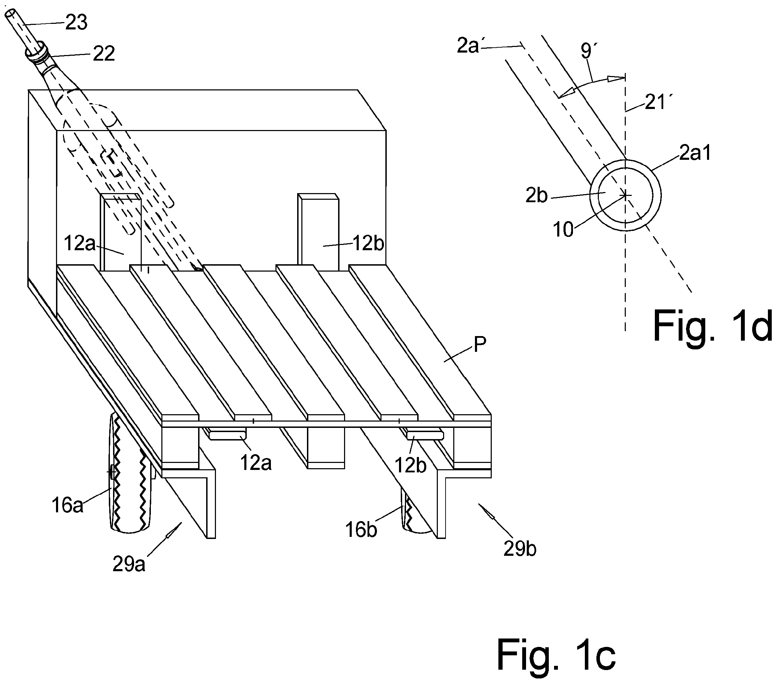

Die **Figuren 1 a**, b zeigen am besten den Grundaufbau des erfindungsgemäßen LastenFahrrades **1:**
Der Fahrer-Teil **2a** des Chassis **2** entspricht im Wesentlichen dem eines konventionellen Fahrrades - bis auf die Dimensionierung der Rahmenteile - also mit einen Sattelrohr **25,** an dessen oberen Ende der Sattel 3 befestigt ist, sowie einem Unterrohr **26,** welches mit dem unteren Ende des Sattelrohres **25** fest verbunden, in der Regel verschweißt ist und schräg nach oben vorne ansteigt. Am oberen Ende des Unterrohres **26** ist das Steuerrohr **22** befestigt, in der Regel verschweißt oder verlötet, durch welches der Gabelschaft **23** der darin drehbaren Vorderrad-Gabel **4** hindurch geführt ist, sowie einem am oberen Ende des Gabelschaftes **23** drehfest befestigten Lenker **5,** vorzugsweise an seinen beidseitigen Enden jeweils mit einem Handgriff **5a, 5b** ausgestattet.

Das Sattelrohr **25** ist über eine Querstrebe gegenüber dem Unterbau **26** versteift, da vorzugsweise kein Oberrohr vorhanden ist, was aber vorhanden sein könnte und deshalb für die Erfindung unwesentlich ist.

Die vom oberen Bereich der Sattelstrebe **25** schräg nach hinten unten weisende Sattelstütze **27** stützt den ebenfalls vom unteren Ende, allerdings nach hinten verlaufenden, Unterzug **2a1** des Fahrerteils **2a** des Chassis oder Rahmen **2** ab, wobei die in der Aufsicht betrachtete Verlaufsrichtung von Unterzug **2a1** und Unterrohr **26** die Längsrichtung **10** des Lastenrades **1** definieren, die bei Geradeausfahrt auch die Fahrtrichtung **10** ist.

Der sich an dieses Fahrerteil **2a** des Chassis **2** nach hinten anschließende Lastenteil **2b** des Chassis **2** umfasst zum einen ein Zentralmodul **31,** welches in diesem Fall kastenförmig ist und in Querrichtung **11** verlaufend etwa vom Unterzug **2a1,** an dem es befestigt ist, bis fast auf Höhe des Sattels **3** aufragt.

An der Rückseite des Zentralmoduls **31** sind zwei in Querrichtung **11** in einem einstellbaren Abstand zueinander angeordnete Hub-Zinken **12a, b** gemeinsam in der Höhe verfahrbar mittels eines im Inneren des Zentralmoduls **31** angeordneten, elektrischen Hub-Antriebes für diese Hubvorrichtung **30.** Auch die diesen versorgende Batterie **17** ist in dem Zentralmodul **31** untergebracht.

Die Hubzinken **12a, b** sind jeweils L-förmig gestaltet mit einem aufrechten Schenkel, der entlang der Zentral-Einheit **31** in der Höhe beweglich geführt ist, und einem vom unteren Ende dieses Schenkels entgegen der Fahrtrichtung nach hinten abragenden Trag-Schenkel, der unter eine Last eingefahren werden kann, etwa in die dafür vorgesehenen Hohlräume einer Palette **P,** wie in **Figur 1c** und den weiteren Zeichnungen dargestellt.

Die Veränderbarkeit des Abstandes der Hubzinken **12a, b** in Querrichtung **11** dient der Anpassung an unterschiedliche Lasten.

Das Lastenteil **2b** stützt sich gegenüber dem Untergrund ab mittels zweier in Querrichtung **11** beabstandeter Rad-Einheiten **29a, b,** von denen jede zumindest einen in Längsrichtung **10** verlaufenden Rad-Träger **13** aufweist, der in diesem Fall, wie am besten in **Figur 1c** und den nachfolgenden Figuren ersichtlich - ein in Längsrichtung **10** verlaufendes L-Profil ist mit einem vertikal stehenden Träger-Schenkel **13a,** an dem meist das jeweilige Rad **16a, b** befestigt ist, und einem an dessen oberen Ende angeordneten, nach außen abragenden Last-Schenkel **13b,** der sich oberhalb des Rades **16a** bzw. **b** über dieses weg nach außen erstreckt etwa bis zu dessen äußersten Ende in Querrichtung **11.**

Die beiden Rad-Einheiten **29a, b** sind mit ihrem vorderen Ende an dem Zentralmodul **31,** insbesondere an dessen Unterseite, befestigt und entlang diesem - vorzugsweise gegensynchron - in Querrichtung **11** bewegbar, vorzugsweise motorisch angetrieben bewegbar mittels einer Verstellvorrichtung **28.**

Vorzugsweise kann die Querbewegung dabei mittels des Hub-Antriebes erfolgen, der auch die Bewegung der Hubvorrichtung **30** bewirkt, indem ein und derselbe Motor durch Umschalten die Hubvorrichtung **30** oder die Verstellvorrichtung **28** bewegen kann.

Vorzugsweise sind die beiden in Querrichtung **11** beabstandeten Räder **16a,** b ebenfalls motorisch angetrieben, wobei vorzugsweise jedes Rad **16a, b** von einen eigenen Motor **15a, b** angetrieben wird, und die beiden Fahr-Motore **15a, b** vorzugsweise in ihrer Drehzahl unabhängig voneinander gesteuert werden können. Der wenigstens eine Fahr-Motor **15**a kann vom Fahrer mittels eines am Lenker **5** angeordneten Geschwindigkeits-Gebers **7** angesteuert werden.

Diese beiden Fahr-Motore **15a, b** könnten auch innerhalb des kastenförmigen Zentralmoduls **31** angeordnet sein und von dort aus das jeweilige Rad antreiben.

Falls die beiden Räder **16a, b** von einem gemeinsamen Fahr-Motor angetrieben werden, und dieser in dem Zentralmodul **31** untergebracht ist, kann das gesamte Lasten-Fahrrad **1** mit nur einem einzigen Motor auskommen, wenn dieser umschaltbar ist um außer dem Fahr-Antrieb wahlweise auch die Hub-Vorrichtung **30** des Ladungsträgers **12,** etwa der Hub-Zinken **12a, b** zu betätigen oder die Verstellvorrichtung **28** zur Querverstellung der Rad-Einheiten **29a, b.**

Getrennte Motore **15a, b** können jedoch auch direkt an oder in den Rad-Einheiten **29a, b** angeordnet werden, beispielsweise als Radnaben-Motore oder wenn zum Zwecke der Federung das jeweilige Rad **16a, b** am Ende eines Schwingen-Armes ausgebildet ist und der jeweilige zugeordnete Fahr-Motor **15a, b** ebenfalls an der Schwinge, vorzugsweise auf dem Schwenk-Arm der Schwinge, angeordnet ist.

Eine solche Schwinge kann mittels Federn oder Torsions-Stab auf einfache Art und Weise gegenüber dem Rad-Träger **13** gefedert sein.

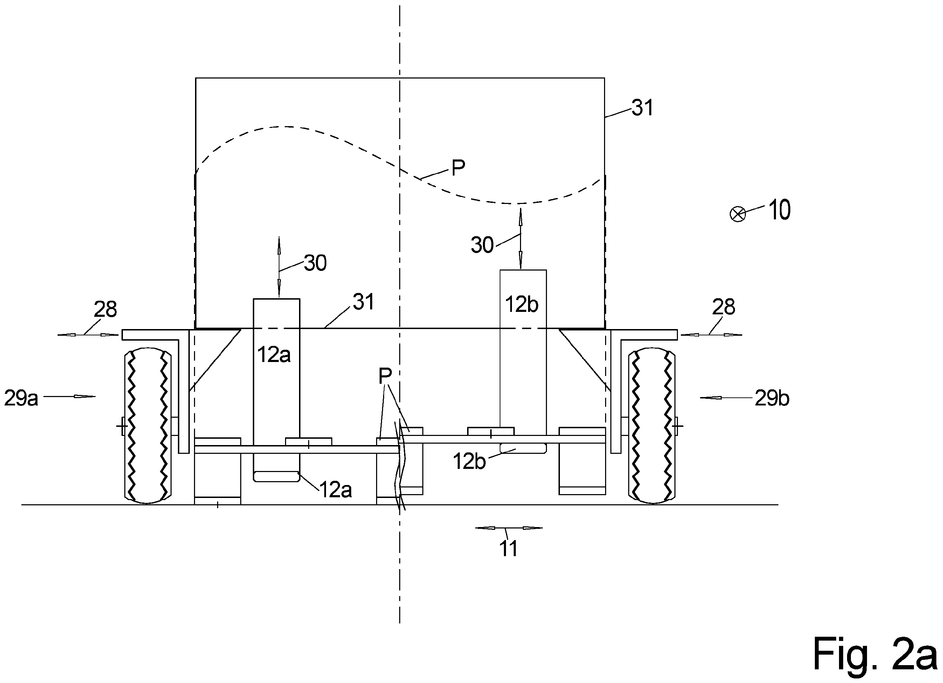

Mit Hilfe der anhebbaren und absenkbaren Hubzinken **12a, b** - die auch zu einem einzigen Ladungsträger **12** zusammengefasst sein können - und der auseinanderfahrbaren und gegeneinander annäherbaren Rad-Einheiten **29a, b** kann gemäß der nachfolgenden **Figuren 2a** - **2d** ohne weitere Hilfsmittel eine Last wie etwa eine Euro-Palette **P** wie folgt aufgenommen werden:
Zunächst werden gemäß der Heckansicht der **Figur 2a** die beiden Rad-Einheiten **29a, b** in Querrichtung **11** so weit auseinandergefahren, dass der lichte Abstand dazwischen größer ist als die Breite der aufzunehmenden Last **P,** z.B. einer Palette **P.**

Ferner werden die beiden Hubzinken **12a, b** auf einen solchen Abstand zueinander eingestellt - was meist manuell erfolgt, da der Abstand nur selten geändert werden muss - dass die Last-Schenkel der Hubzinken **12a, b** in die Freiräume in oder unter der Last, in diesem Fall einer Euro-Palette **P,** entgegen der Fahrtrichtung **10** eingefahren werden können durch nach hinten Fahren des Lastenrades **1,** wofür die Hubzinken **12a, b** ausreichend tief nach unten, in der Regel auf eine Höhe knapp über dem Untergrund abgesenkt werden müssen, was in aller Regel nur für beide Hubzinken **12a, b** gemeinsam, also synchron, möglich ist.

In dieser in **Figur 2a** links dargestellten Stellung wird das Lastenrad **1** nach hinten und dadurch die Hubzinken **12a, b** unter die Last eingefahren, wobei die Rad-Einheiten **29a, b** seitlich neben der Last **P** nach hinten fahren.

In dieser Ausgangsstellung gemäß **Figur 2a** befinden sich die Rad-Einheiten **29a, b,** insbesondere die Räder **16a, b** und die Last-Schenkel **13b** des Rad-Trägers 13, in der Breite außerhalb der Breite des kastenförmigen Zentralmoduls **31,** dessen Breite der maximalen Breite der aufnehmbaren Last **P** entspricht.

Deshalb reichen vom vorderen Ende der Rad-Einheiten **29a, b** die dreieckig dargestellten Tragelemente Richtung Längsmitte **10"** in den Breitenbereich des Zentralmoduls **31** hinein und sind an diesem geführt.

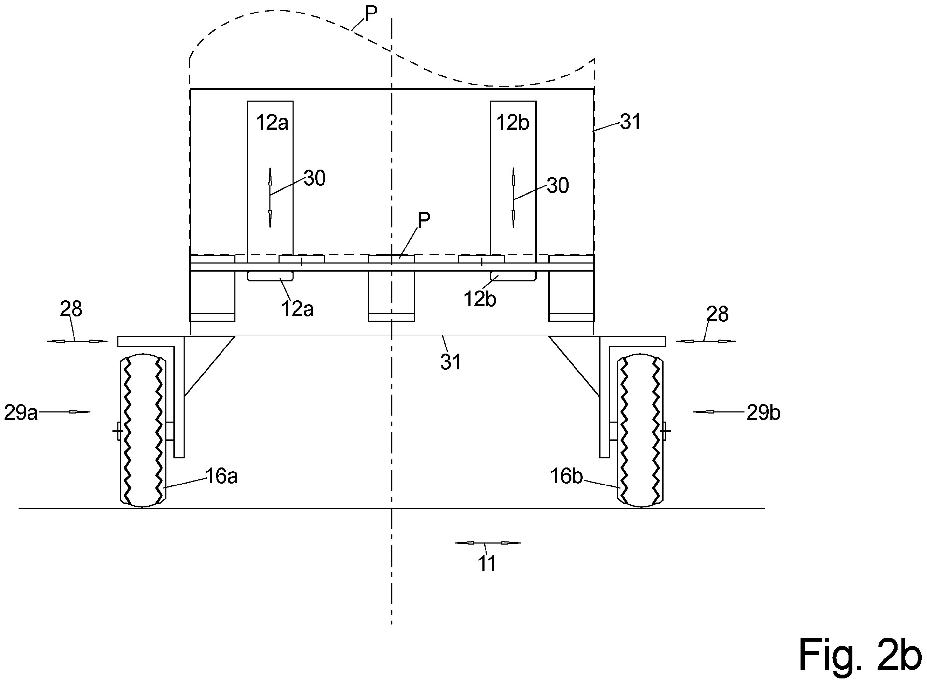

Anschließend werden durch Betätigen der Hubvorrichtung **30** die Hubzinken **12a, b** an dem Zentralmodul **31** nach oben verfahren, sodass zunächst die Last-Schenkel **13b** die Unterseite der Last **P** kontaktieren und diese anzuheben beginnt - wie in **Figur 2a** in der rechten Hälfte dargestellt - und durch weiteres Anheben die Palette **P** gemäß **Figur 2b** so weit angehoben wird, bis sich ihre Unterseite auf einer Höhen-Lage oberhalb des oberen Endes der Rad-Einheiten **29a, b,** insbesondere der Oberseite deren Last-Schenkeln **13b,** befindet.

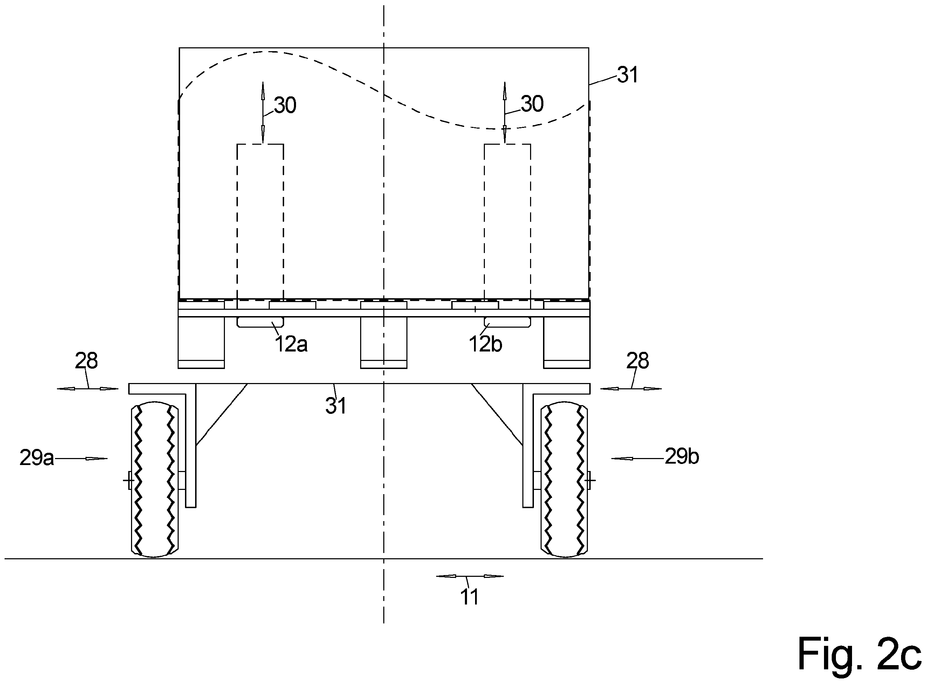

Dann können die Rad-Einheiten **29a, b** gemäß **Figur 2c** zunehmend zur Längsmitte **10"** hin eingefahren werden - wie in **Figur 2c** in der linken Hälfte dargestellt - bis sich die beiden Rad-Einheiten **29a, b** nicht mehr über die in der Aufsicht betrachteten Längs-Au-ßenkanten der Last, etwa der Palette **P** vorstehen, wie in **Figur 2c** rechte Hälfte dargestellt.

In dieser Fahr-Stellung ist das Lasten-Teil **2b** und damit das Lastenrad **1** insgesamt nicht mehr breiter als die Breite der aufgenommenen Palette **P** und damit die Breite des Lastenrades **1** soweit als möglich minimiert, sodass das Lastenrad **1** dann problemlos entlang von Radwegen gefahren werden kann, was in der breiten Belade-Stellung gemäß **Figur 2a** in den meisten Fällen nicht mehr möglich ist, häufig auch nicht erlaubt wäre wegen zu großer Breite des Lastenrades **1.**

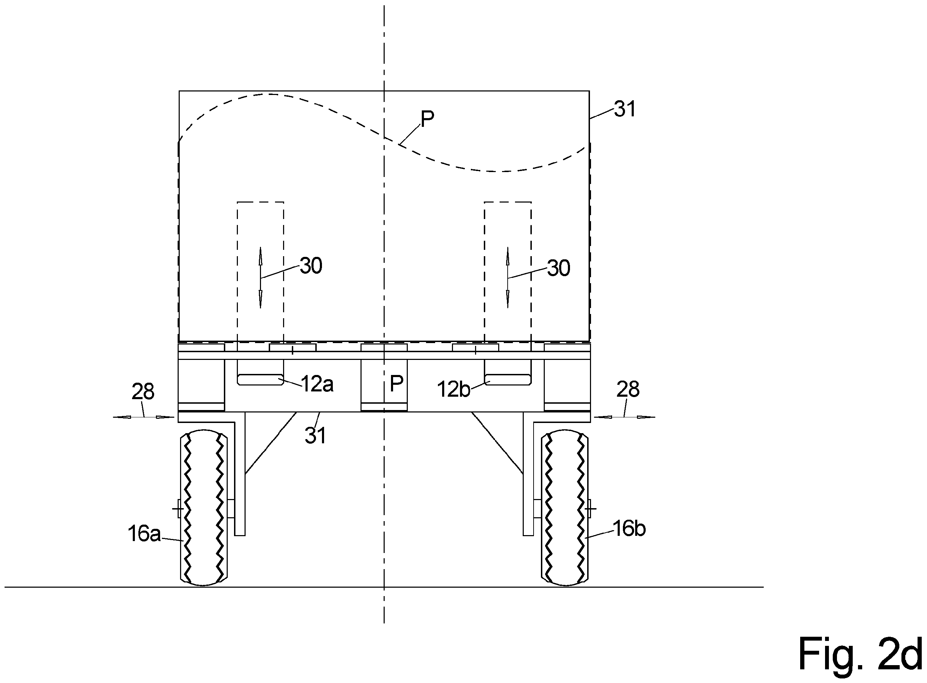

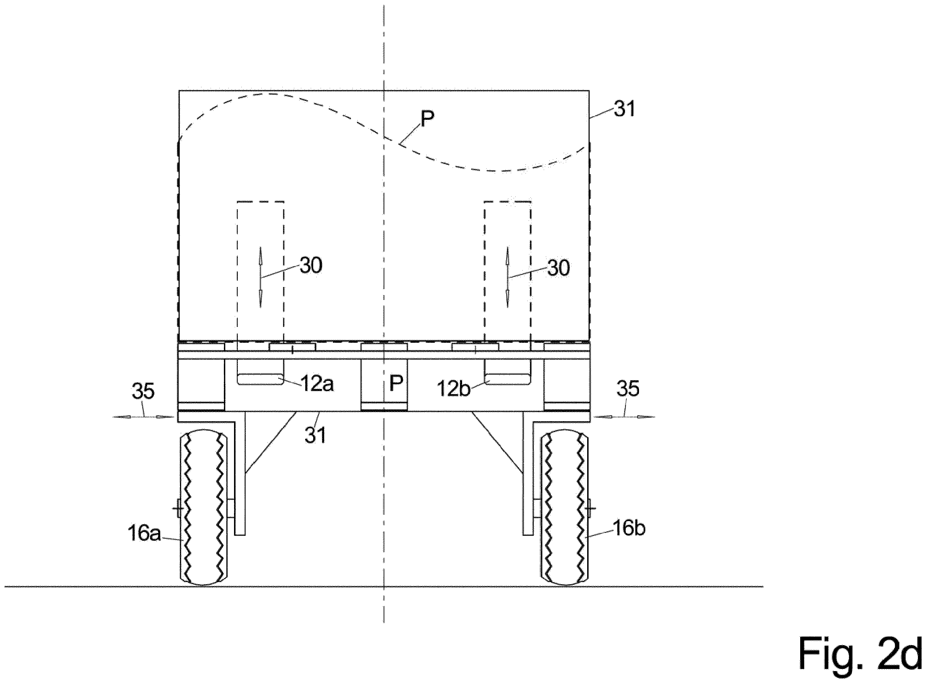

Um die Last **P** zu transportieren kann die Last von den Hubzinken **12a, b** in dieser Höhe, also schwebend über den Rad-Einheiten **29a, b** - die in ihrer Querposition in der schmalen Fahr-Stellung natürlich verriegelt werden können - gehalten werden gemäß **Figur 2c** oder-zur Absenkung des Schwerpunktes und Entlastung der Hubvorrichtung **30**-mittels der Hubvorrichtung **30** abgesenkt werden, bis die Palette **P** auf der Oberseite der beiden Last-Schenkel **13b** der Rad-Träger **13** aufsitzt gemäß **Figur 2d** und die Hubzinken **12a, b** entlastet sind und nicht einmal mehr in Kontakt mit der Last **P** stehen müssen.

Mögliche Weiterbildungen sind aus den **Figuren 1a - d** ersichtlich:
Am Steuerrohr **22** ist ein Lenker-Sensor **8** angeordnet, der den Einschlagwinkel **9** des Lenkers **5** gegenüber dem Chassis, also in diesem Fall dem Fahrer-Teil **2a** des Chassis **2,** misst, also wie in **Figur 1a**, **b** dargestellt, den Winkel zwischen der Längsrichtung **10** und der Hauptebene des Vorderrades **6.**

Der Lenkersensor **8** meldet diesen Einschlagwinkel **9** an die Steuerung **20,** die in Abhängigkeit davon die Drehzahlen der beiden Fahr-Motoren **15a,** b für die Hinterräder **16a, b** und damit deren Drehzahl unterschiedlich steuert, in der Regel die Drehzahl des kurvenäußeren Rades schneller wählt.

Optional kann gemäß **Figur 1c**, **d** auch der gesamte Fahrer-Teil **2a** gegenüber dem Lasten-Teil **2b** des Chassis **2** um die Längsrichtung **10** des Lastenfahrrades geneigt werden, sodass sich der Fahrer-Teil **2a** in die Kurve legen kann.

Wie am besten in Figur 3a, **b** zu erkennen, ist zu diesem Zweck der in der Regel horizontal verlaufende Unterzug **2a1** an seinem hinteren Ende als Lagerungsstelle **24** in einem sich daran nach hinten anschließenden Rohrstutzen drehbar gelagert, der Bestandteil des Lasten-Teils **2b** des Chassis **2** ist.

Der Neigungswinkel **9'** zwischen der Vertikalebene **21'** und der Fahrerteil-Ebene **2a'** wird von einem Neigungssensor **18** gemessen und an die Steuerung **20** gemeldet, der vorzugsweise an der Lagerungsstelle **24** angeordnet ist.

Die Steuerung 20 berücksichtigt bei der Steuerung der Drehzahl der beiden unabhängigen Fahr-Motore **15a, b** für die beiden Hinterräder **16a, b** auch den Neigungswinkel **9',** um eine sichere Kurvenfahrt zu ermöglichen, wobei vorzugsweise das Lastenfahrrad **1** auch einen - nicht dargestellten - Geschwindigkeitssensor aufweist und/oder einen Drehzahlsensor an den Motoren **15a, b** oder Hinterräder **16a, b** und/oder einen Drehzahlsensor am Vorderrad **6.**

Die **Figur 1b** zeigt in der Seitenansicht eine Lösung mit einem zusätzlichen Tret-Antrieb **19:**

Dort ist zu erkennen, dass - wie bei einem normalen Fahrrad - eine zweiarmige Tretkurbel um eine in Querrichtung **11** verlaufende Tretlagerachse, die etwa am Treffpunkt von Unterrohr **26** und Sattelstrebe **25** durch ein Tretlager verläuft, vorhanden ist, die an ihren Enden jeweils ein nach außen ragendes Pedal zum darauf treten mit den Füßen des Fahrers aufweist.

Drehfest, insbesondere koaxial mit der Tretlagerachse, ist ein elektrischer Generator **14** angeordnet. Der durch Treten von diesem erzeugte Strom wird dem wenigstens einen Fahr-Motor **15** und/oder der Batterie **17** zugeführt über nicht dargestellte elektrische Leitungen.

### BEZUGSZEICHENLISTE

- 1: Lastenrad
- 2: Chassis
- 2a: Fahrerteil
- 2a': Fahrerteil-Ebene
- 2a1: Unterzug
- 2a1': Schwenkachse
- 2b: Lastenteil
- 3: Sattel
- 4: drehbare Gabel
- 5: Lenker
- 5a, b: Handgriff
- 6: Vorderrad
- 7: Geschwindigkeits-Geber
- 8: Lenker-Sensor
- 9: Einschlagwinkel
- 9': Neigewinkel
- 10: Fahrtrichtung, Längsrichtung
- 11: Querrichtung
- 12: Ladungsträger
- 12a, b: Hubzinke
- 13: Radträger
- 13a,: Träger-Schenkel
- 13b: Last- Schenkel
- 14: Generator
- 15a, b: Motor
- 16a, b: Hinterrad
- 17: Batterie
- 18: Neigungs-Sensor
- 19: Tret-Antrieb
- 20: Steuerung
- 21': Vertikal-Ebene
- 22: Steuerrohr
- 23: Gabelschaft
- 24: Lagerungs-Stelle
- 25: Sattelstrebe, Sattelrohr
- 26: Unterrohr
- 27: Sattelstütze
- 28: Verstellvorrichtung
- 29a, b: Rad-Einheit
- 30: Hubvorrichtung
- 31: Zentral-Modul

- P: Last, Palette

## Patentansprüche

1. **Lastenrad (1)** mit Rädern **(6, 16a, b),** zum Transportieren einer Last, insbesondere einer Palette **(P),** wobei das Lastenrad **(1)** umfasst
- wenigstens einen elektrischen Fahr-Motor **(15a, b),** der mit wenigstens einem der Räder **(6, 16a, b)** wirkverbunden ist, von denen wenigstens eines lenkbar ist,
- einem Chassis **(2),** umfassend
- ein Fahrer-Teil **(2a)** mit
- einem Sattel **(3)** für den Fahrer, einem im Fahrer-Teil **(2a)** schwenkbaren Lenker **(5)** und einem der Räder **(6, 16a, b),**
- insbesondere einem Geschwindigkeits-Geber **(7),** der insbesondere am Lenker **(5)** befestigt ist, für den Fahr-Motor **(15a, b),**
- einem Lasten-Teil **(2b)** des Chassis **(2),** welches umfasst
- einen Ladungsträger **(12),**
- zwei in Querrichtung **(11)** zur Fahrtrichtung **(10)** zueinander beabstandete Rad-Einheiten **(29a, b)** mit je einem Rad **(16a, b), gekennzeichnet durch**
- eine Hubvorrichtung **(30)** mit dem anhebbaren Ladungsträger **(12)** zum Einfahren unter der Last und Anheben der Last,
- eine Verstellvorrichtung **(28),** mit der der freie Quer-Abstand der in Querrichtung **(11)** beabstandeten Räder **(16a, b),** insbesondere Hinterräder **(16a, b),** veränderbar ist zwischen einer Lade-Stellung, in der er größer ist als die Breite der Last **(P),** und einer Fahr-Stellung, in der er geringer ist als die Breite der Last **(P).**

2. Lastenrad nach Anspruch 1,
**gekennzeichnet durch**
- das Lasten-Teil **(2b)** in Fahrtrichtung **(10)** hinter dem Fahrer-Teil **(2a)** angeordnet ist und/oder
- das in dem Fahrer-Teil **(2a)** angeordnete Rad das Vorderrad **(6)** ist und die zwei in Querrichtung **(11)** zur Fahrtrichtung **(10)** zueinander beabstandeten Räder **(16a, b),** die Hinterräder **(16a, b)** sind.

3. Lastenrad nach Anspruch 1,
**gekennzeichnet durch**
der anhebbare Ladungsträger **(12)** zwei in oder entgegen der Fahrtrichtung abstehende, in Querrichtung **(11)** zueinander beabstandete, Hubzinken **(12a, b)** umfasst.

4. Lastenrad nach einem der vorhergehenden Ansprüche,
**gekennzeichnet durch**
in der Fahr-Stellung
- die in Querrichtung zueinander beabstandeten Räder **(16a, b)** unter dem Ladungsträger **(12)** angeordnet sind,
- insbesondere die Fahr-Breite zwischen den äußeren Enden der in Querrichtung **(11)** beabstandeten Rad-Einheiten **(29a, b)** maximal der Breite der Last **(P)** entspricht.

5. Lastenrad nach einem der vorhergehenden Ansprüche,
**gekennzeichnet durch**
- die Rad-Einheiten **(29a, b)** je eine Rad-Abdeckung über dem jeweiligen Rad umfassen,
- die Rad-Abdeckungen ausgebildet sind als Ladungsträger **(12b)** zum Absetzen der Last darauf während der Fahrt.

6. Lastenrad nach Anspruch 2, oder den Ansprüchen 4 oder 5, wenn diese von Anspruch 2 abhängig sind,
**dadurch gekennzeichnet, dass**
- der in der Höhe bewegliche Ladungsträger **(12a)** in einer Höhe über den Rad-Einheiten **(29a, b)** fixierbar, insbesondere formschlüssig mechanisch verriegelbar, ist. und/oder
- der wenigstens eine elektrische Fahr-Motor **(15a, b),** mit dem Vorderrad **(6)** oder wenigstens einem der in Querrichtung **(11)** zueinander beabstandeten Räder **(16a, b)** wirkverbunden ist.

7. Lastenrad nach einem der vorhergehenden Ansprüche,
**gekennzeichnet durch**
die Rad-Einheiten **(29a, b)**
- entweder am Chassis des Lasten-Teiles **(2b)** befestigt und insbesondere in Querrichtung **(11)** verfahrbar sind
- oder an der Hubvorrichtung **(30)** befestigt und insbesondere um eine in Fahrtrichtung **(10)** verlaufende Schwenkachse verschwenkbar sind.
und/oder
- die Quer-Bewegung der Rad-Einheiten **(29a, b)** und/oder oder die Hubvorrichtung **(30)** von dem wenigstens einen Fahr-Motor **(15a, b)** angetrieben wird.

8. Lastenrad nach einem der Ansprüche 3 - 7,
**dadurch gekennzeichnet, dass**
die Hubvorrichtung **(30)**
- wenigstens eine Gewindespindel-Einheit
oder
- eine Seilwinde für das Verfahren der Hubzinken **(12a, b)** in der Höhe umfasst.

9. Lastenrad nach einem der vorhergehenden Ansprüche,
**gekennzeichnet durch**
- je einen elektrischer Motor **(15a, b)** der mit je einem der Hinterräder (**16**a, b) wirkverbunden ist,
- einen Lenker-Sensor **(7)** zum Detektieren eines Einschlagwinkels **(9)** der Gabel **(4)** gegenüber dem Fahrer-Teil (**2**a),
- eine Steuerung **(20),** die die Messsignale des Sensors **(7)** erhält und abhängig davon die Motoren **(15a, b)** für die Kurvenfahrt unterschiedlich schnell antreibt.

10. Lastenrad nach einem der vorhergehenden Ansprüche,
**dadurch gekennzeichnet, dass**
- das Chassis **(2)** einen horizontal nach hinten weisenden Unterzug **(2a1)** des vorderen Fahrerteiles (**2**a) aufweist, welcher schwenkbar um eine in Fahrtrichtung **(10)** verlaufende Schwenkachse an dem hinteren Lasten-Teil **(2b)** befestigt ist.

11. Lastenrad nach Anspruch 9 oder Anspruch 10, falls letzterer von Anspruch 9 abhängig ist,
**dadurch gekennzeichnet, dass**
- ein Neigungs-Sensor **(18)** zum Detektieren des Schwenkwinkels **(9')** zwischen dem Unterzug **(2a1)** und dem Lastenteil **(2b)** vorhanden ist,
- die Steuerung **(20)** auch die Messsignale des Sensors **(18)** erhält und abhängig davon die Fahr-Motore **(15a, b)** für die Kurvenfahrt unterschiedlich schnell antreibt.

12. Lastenrad nach einem der vorhergehenden Ansprüche,
**dadurch gekennzeichnet, dass**
- die quer beabstandeten Räder **(16a, b),** gegenüber dem Lastenteil **(2b)** des Chassis **(2)** gefedert sind, insbesondere unabhängig voneinander gefedert sind,
- insbesondere indem sie jeweils an einer Schwinge befestigt sind, welche um eine Schwingenachse am Lastenteil **(2b)** verschwenkbar ist und insbesondere um die Schwingenachse herum ein Torsionskörper angeordnet ist, der eine Rückstellkraft in die Normallage der Schwinge bewirkt.

13. Lastenrad nach einem der vorhergehenden Ansprüche,
**dadurch gekennzeichnet, dass**
die Fahrbremse aus dem wenigstens einen elektrischen Fahr-Motoren **(15a, b)** und deren Verzögerungs-Wirkung als Generator bei fehlender Stromzufuhr besteht.

14. Lastenrad nach einem der vorhergehenden Ansprüche,
**dadurch gekennzeichnet, dass**
eine Feststellbremse mit Bremsbacken vorhanden ist, die in der nicht-bremsenden Stellung gehalten sind solange Strom aus dem Stromkreislauf des Lastenrades **(1)** anliegt und sich bei fehlendem Strom automatisch mittels Vorspannung in die bremsende Stellung bewegen, insbesondere durch Andrücken an einer Bremsscheibe.

15. Lastenrad nach einem der vorhergehenden Ansprüche,
**dadurch gekennzeichnet, dass**
das Lastenrad (1) einen Tret-Antrieb **(19)** aufweist
- mit einer zweiseitigen Tretkurbel, die drehbar um eine Kurbelachse im Fahrer-Teil **(2a)** gelagert ist und an deren Enden Pedale befestigt sind.
- der mit wenigstens einem der Räder **(6, 16a, b)** in elektrischer Wirkverbindung steht, indem
- der Tret-Antrieb mit einem elektrischen Generator **(14),** wirkverbunden ist,
- der elektrische Generator **(14)** über eine elektrische, stromführende Verbindung mit den Elektro-Motoren **(15a, b)** und/oder einer Batterie **(17)** verbunden ist.

## Claims

1. Cargo bike (1) with wheels (6, 16a, b), for transporting a load, in particular a pallet (P), wherein the cargo bike (1) comprises
- at least one electric driving motor (15a, b) operatively connected to at least one of the wheels (6, 16a, b), at least one of which is steerable,
- a chassis (2) comprising
- a driver part (2a) with
- a saddle (3) for the driver, a handlebar (5) which can be pivoted in the driver part (2a), and one of the wheels (6, 16a, b)
- in particular a speed transmitter (7), which is attached in particular to the handlebar (5), for the driving motor (15a, b),
- a load part (2b) of the chassis (2), which comprises
- a load carrier (12),
- two wheel units (29a, b) spaced apart from one another in the transverse direction (11) relative to the direction of travel (10), each having a wheel (16a, b),
**characterized by**
- a lifting unit (30) with the liftable load carrier (12) for moving in under the load and lifting the load,
- an adjustment device (28) with which the free transverse distance of the wheels (16a, b) spaced apart in the transverse direction (11), in particular rear wheels (16a, b), can be varied between a loading position, in which it is greater than the width of the load (P), and a driving position, in which it is less than the width of the load (P).

2. Cargo bike according to claim 1,
**characterized in that**
- the load part (2b) is arranged behind the driver part (2a) in the direction of travel (10) and/or
- the wheel arranged in the driver's part (2a) is the front wheel (6) and the two wheels (16a, b) spaced apart in transverse direction (11) to the direction of travel (10) are the rear wheels (16a, b).

3. Cargo bike according to claim 1,
**characterized in that**
the liftable load carrier (12) comprises two lifting prongs (12a, b) projecting in or against the direction of travel and spaced apart from one another in the transverse direction (11).

4. Cargo bike according to one of the preceding claims,
**characterized in that**
in the driving position
- the wheels (16a, b) spaced apart in transverse direction are arranged under the load carrier (12),
- in particular the driving width between the outer ends of the wheel units (29a, b) spaced apart in the transverse direction (11) corresponds at most to the width of the load (P).

5. Cargo bike according to one of the preceding claims,
**characterized in that**
- the wheel units (29a, b) each comprise a wheel cover over the respective wheel,
- the wheel covers are formed as load carriers (12b) for depositing the load thereon during travel.

6. Cargo bike according to claim 2, or claims 4 or 5 when dependent on claim 2,
**characterized in that**
- the load carrier (12a), which is movable in height, is fixable at a height above the wheel units (29a, b), in particular is mechanically lockable in a positive-locking manner
and/or
- the at least one electric drive motor (15a, b) is operatively connected to the front wheel (6) or at least one of the wheels (16a, b) spaced apart in the transverse direction (11).

7. Cargo bike according to one of the preceding claims,
**characterized in that**
the wheel units (29a, b)
- are either fixed to the chassis of the load part (2b) and in particular movable in the transverse direction (11)
- or attached to the lifting device (30) and in particular pivotable about a pivot axis extending in the direction of travel (10).
and/or
- the transverse movement of the wheel units (29a, b) and/or the lifting device (30) is driven by the at least one travel motor (15a, b).

8. Cargo bike according to one of claims 3-7,
**characterized in that**
the lifting device (30) comprises
- at least one threaded spindle unit
or
- a cable winch for the translating of the lifting prongs (12a, b) in height.

9. Cargo bike according to any of the preceding claims,
**characterized by**
- one electric motor (15a, b) each operatively connected to one of the rear wheels (16a, b),
- a handlebar sensor (7) for detecting an angle of steering (9) of the fork (4) relative to the driver part (2a),
- a control unit (20) which receives the measurement signals from the sensor (7) and, depending thereon, drives the motors (15a, b) at different speeds for cornering.

10. Cargo bike according to one of the preceding claims,
**characterized in that**
- the chassis (2) has a horizontally rearwardly pointing lower beam (2a1) of the front driver part (2a), which is pivotably fastened to the rear load part (2b) about a pivot axis extending in the direction of travel (10).

11. Cargo bike according to claim 9 or claim 10, if the latter is dependent on Claim 9, **characterized in that**
- a tilt sensor (18) is provided for detecting the pivot angle (9') between the lower beam (2a1) and the load part (2b),
- the control unit (20) also receives the measuring signals of the sensor (18) and, depending thereon, drives the driving motors (15a, b) at different speeds for cornering.

12. Cargo bike according to one of the preceding claims,
**characterized in that**
- the transversely spaced wheels (16a, b) are sprung, in particular independently sprung, relative to the load part (2b) of the chassis (2),
- in particular **in that** they are each fastened to a rocker which can be pivoted about a rocker axis on the load part (2b) and, in particular, a torsion body is arranged around the rocker axis, which torsion body brings about a restoring force to the normal position of the rocker.

13. Cargo bike according to one of the preceding claims,
**characterized in that**
the driving brake consists of the at least one electric driving motor (15a, b) and its decelerating effect as a generator in the absence of power supply.

14. Cargo bike according to one of the preceding claims,
**characterized in that**
a parking brake with brake shoes is provided, which are held in the non-braking position as long as current from the power circuit of the cargo bike (1) is applied and which move automatically into the braking position by means of bias in the absence of current, in particular by pressing against a brake disc.

15. Cargo bike according to one of the preceding claims,
**characterized in that**
the cargo bike (1) has a pedal drive (19)
- with a two-sided pedal crank which is mounted rotatably about a crank axis in the driver part (2a) and to the ends of which are attached pedals
- which is in electrical operative connection with at least one of the wheels (6, 16a, b) **in that**
- the pedal drive is operatively connected to an electric generator (14),
- the electric generator (14) is connected to the electric motors (15a, b) and/or a battery (17) via an electric, current-carrying connection.

## Revendications

1. Bicyclette de transport (1) avec des roues (6, 16a, b), pour transporter une charge, en particulier une palette (P), dans laquelle la bicyclette de transport (1) comprend
- au moins un moteur électrique de déplacement (15a, b), qui est relié fonctionnellement à au moins l'une des roues (6, 16a, b), dont au moins l'une est dirigeable,
- un châssis (2) comprenant
- une partie conducteur (2a) avec
- une selle (3) pour le conducteur, un guidon (5) pouvant pivoter dans la partie conducteur (2a) et une des roues (6, 16a, b),
- en particulier un capteur de vitesse (7), qui est fixé en particulier sur le guidon (5), pour le moteur de déplacement (15a, b),
- une partie de charge (2b) du châssis (2), qui comprend
- un support de charge (12),
- deux unités de roues (29a, b) espacées l'une de l'autre dans la direction transversale (11) par rapport à la direction de déplacement (10) avec chacune une roue (16a, b),
**caractérisé par**
- un dispositif de levage (30) avec le support de charge (12) pouvant être soulevé pour l'introduction sous la charge et le soulèvement de la charge,
- un dispositif de réglage (28) avec lequel la distance transversale libre des roues (16a, b) espacées dans la direction transversale (11), en particulier des roues arrières (16a, b), peut être modifiée entre une position de chargement dans laquelle elle est supérieure à la largeur de la charge (P) et une position de déplacement dans laquelle elle est inférieure à la largeur de la charge (P).

2. Bicyclette de transport selon la revendication 1,
**caractérisée en ce que**
- la partie de charge (2b) est disposée derrière la partie conducteur (2a) dans la direction de déplacement (10), et/ou
- la roue disposée dans la partie conducteur (2a) est la roue avant (6) et les deux roues (16a, b) espacées l'une de l'autre dans la direction transversale (11) à la direction de déplacement (10) sont les roues arrières (16a, b).

3. Bicyclette de transport selon la revendication 1,
**caractérisé en ce que**
le support de charge (12) pouvant être soulevé comprend deux dents de levage (12a, b) faisant saillie dans la direction de déplacement ou dans la direction contraire et espacées l'une de l'autre dans la direction transversal (11).

4. Bicyclette de transport selon l'une des revendications précédentes,
**caractérisée en ce que**
dans la position de déplacement
- les roues (16a, b) espacées l'une de l'autre dans la direction transversale sont disposées sous le support de charge (12),
- en particulier, la largeur de déplacement entre les extrémités extérieures des unités de roues (29a, b) espacées dans la direction transversale (11) correspond au maximum à la largeur de la charge (P).

5. Bicyclette de transport selon l'une des revendications précédentes,
**caractérisée en ce que**
- les unités de roue (29a, b) comprennent chacune un recouvrement de roue au-dessus de la roue respective,
- les recouvrements de roue sont adaptés comme des supports de charge (12b) pour y déposer la charge pendant le déplacement.

6. Bicyclette de transport selon la revendication 2, ou les revendications 4 ou 5 si elles dépendent de la revendication 2,
**caractérisé en ce que**
- le support de charge (12a), mobile en hauteur, peut être fixé à une hauteur au-dessus des unités de roue (29a, b), notamment verrouillé mécaniquement par complémentarité de forme,
et/ou
- ledit au moins un moteur électrique de déplacement (15a, b) est relié fonctionnellement à la roue avant (6) ou à au moins une des roues (16a, b) espacées l'une de l'autre dans la direction transversale (11).

7. Bicyclette de transport selon l'une des revendications précédentes,
**caractérisée en ce que**
les ensembles de roues (29a, b)
- sont fixés au châssis de la partie de charge (2b) et notamment déplaçables dans la direction transversale (11),
- soit fixées au dispositif de levage (30) et pouvant notamment pivoter autour d'un axe de pivotement s'étendant dans la direction de déplacement (10),
et/ou
- le mouvement transversal des unités de roue (29a, b) et/ou le dispositif de levage (30) est entraîné par l'au moins un moteur de déplacement (15a, b).

8. Bicyclette de transport selon l'une des revendications 3 à 7,
**caractérisée en ce que**
le dispositif de levage (30) comprend
- au moins une unité de broche filetée
ou
- un treuil pour le déplacement en hauteur des fourches de levage (12a, b).

9. Bicyclette de transport selon l'une des revendications précédentes,
**caractérisée par**
- un moteur électrique (15a, b) qui est relié fonctionnellement à l'une des roues arrières (16a, b),
- un capteur de guidon (7) pour détecter un angle de braquage (9) de la fourche (4) par rapport à la partie conducteur (2a),
- une commande (20) qui reçoit les signaux de mesure du capteur (7) et qui, en fonction de ceux-ci, entraîne les moteurs (15a, b) à des vitesses différentes pour les virages.

10. Bicyclette de transport selon l'une des revendications précédentes,
**caractérisé en ce que**
- le châssis (2) comporte une traverse inférieure (2a1) de la partie conducteur avant (2a), orientée horizontalement vers l'arrière, qui est fixée à la partie arrière de charge (2b) de manière à pouvoir pivoter autour d'un axe de pivotement s'étendant dans la direction de déplacement (10) 30.

11. Bicyclette de transport selon la revendication 9 ou la revendication 10, si cette dernière dépend de la revendication 9,
**caractérisé en ce que**
- un capteur d'inclinaison (18) est présent pour détecter l'angle de pivotement (9') entre la traverse inférieure (2a1) et la partie de charge (2b),
- la commande (20) reçoit également les signaux de mesure du capteur (18) et, en fonction de ceux-ci, entraîne les moteurs de déplacement (15a, b) à des vitesses différentes pour les virages.

12. Bicyclette de transport selon l'une des revendications précédentes,
**caractérisée en ce que**
- les roues (16a, b), espacées transversalement, sont suspendues par rapport à la partie de charge (2b) du châssis (2), notamment indépendamment les unes des autres,
- en particulier **en ce qu'**elles sont fixées chacune à un bras oscillant qui peut pivoter autour d'un axe de bras oscillant sur la partie de charge (2b) et en particulier **en ce qu'**un corps de torsion est disposé autour de l'axe de bras oscillant, lequel provoque une force de rappel dans la position normale du bras oscillant.

13. Bicyclette de transport selon l'une des revendications précédentes,
**caractérisée en ce que**
le frein de déplacement se compose dudit au moins un moteur électrique de déplacement (15a, b) et de son effet de décélération en tant que générateur en l'absence d'alimentation électrique.

14. Bicyclette de transport selon l'une des revendications précédentes,
**caractérisée en ce que**
elle comporte un frein de stationnement avec des mâchoires de frein qui sont maintenues en position de non-freinage tant qu'il y a du courant provenant du circuit électrique de la bicyclette de transport (1) et qui, en l'absence de courant, se déplacent automatiquement en position de freinage par précontrainte, notamment en appuyant sur un disque de frein.

15. Bicyclette de transport selon l'une des revendications précédentes,
**caractérisée en ce que**
la bicyclette de transport (1) présente un entraînement au pédalage (19).
- avec un pédalier à deux côtés, qui est logé de manière rotative autour d'un axe de pédalier dans la partie conducteur (2a) et aux extrémités duquel sont fixées des pédales,
- qui est en liaison active électrique avec au moins l'une des roues (6, 16a, b), **en ce que**
- l'entraînement au pédalier est en liaison fonctionnelle avec un générateur électrique (14),
- le générateur électrique (14) est relié aux moteurs électriques (15a, b) et/ou à une batterie (17) par une liaison électrique conductrice de courant.
